# EUROPEAN PATENT APPLICATION

(11) **EP 1 050 950 A2**
(43) Date of publication of application: **08.11.2000**
(21) Application number: 00303862.7
(22) Date of filing: 08.05.2000
(51) Int. Cl.: H02M 1/12

(54) **Improvements in and relating to power supply**

(30) Priority: 07.05.1999 GB 9910536
(71) Applicant: Glynwed Pipe Systems Limited, Bretfield Court, Dewsbury WF12 9DB (GB)
(72) Inventor: Wilkinson, Kevin, Glynwed Pipe Systems Ltd, Bretfield Court, Dewsbury WF12 9DB (GB)
(74) Representative: Pawlyn, Anthony Neil

(57) **Abstract**

The invention provides a method of controlling a voltage, the method comprising providing an alternating current waveform input to voltage controlling apparatus, rectifying the input to give a single polarity waveform, feeding the single waveform to a waveform chopping stage, feeding the output of the waveform chopping stage to the primary coil of a transformer, the output of the secondary coil of the transformer forming the output waveform of the method. Advantages in terms of the weight and efficiency of voltage control units result.

## Description

This invention concerns improvements in and relating to power supply, particularly, but not exclusively in relation to power supply for electrofusion welding operations.

A variety of systems use power from the mains which is then altered to give varying voltages suitable for welding with the modified AC power supply. Amongst such uses are power supply control units for electrofusion welding operations. Electrofusion welding operations are intended to join plastic pipes together or to fittings. For instance, the pipe ends can be inserted into a single use plastic collar which has an embedded coiled wire inside it. When a controlled voltage is passed over the wire, it will heat up and melt the pipe ends to the collar so forming a gas tight joint.

An increasing requirement of systems which draw power from the mains is that they do not make any significant contribution of noise back into the mains power supply.

To date noise reduction in such systems, particularly systems drawing high power, has been achieved by providing filtering of the output back into the mains. Whilst such filtering is successful to a degree, noise contributions still occur.

Amongst the aims of the present invention is the provision of a power control system which does not introduce significant noise into the mains power source. It is also amongst the aims of the present invention to provide an electrofusion welding unit which meets such aims and / or which is more compact and portable than prior art systems.

According to a first aspect of the invention we provide a method of controlling a voltage, the method comprising providing an alternating current waveform input to voltage controlling apparatus, rectifying the input to give a single polarity waveform, feeding the single waveform to a waveform chopping stage, feeding the output of the waveform chopping stage to the primary coil of a transformer, the output of the secondary coil of the transformer forming the output waveform of the method.

The AC input may be 240V, but other voltages may be used. The AC input may be mains sourced.

Rectification may be effected by a full wave rectification stage. The rectification stage may use a bridge.

The chopping stage may follow conversion of the AC waveform to DC waveform, but most preferably the chopping stage is performed on a rectified AC waveform.

Where conversion to DC is desired, preferably the conversion is effected by a capacitor connected to both sides of the circuit.

Where conversion to DC is effected, preferably the chopping stage is effected by a switch. Preferably the switch is alternatively in a connected and disconnected position. The chopping stage may thus cut the DC waveform into a series of square profiled pulses. The output from this chopping stage is preferably then fed to the primary coil of the transformer for stepping down in voltage.

In a preferred embodiment, particularly for chopping a rectified AC input, the chopping stage provides two switches between one side of the circuit and the primary coil of a transformer and two further switches between the other side of the circuit and the primary coil of the transformer.

Preferably one of the switches on one side of the circuit is connected, when closed, to one end of the primary coil of the transformer and the other switch on that side of the circuit is connected, when closed, to the other end of the primary coil of the transformer. More preferably, one of the switches on the other side of the circuit is connected to one end of the primary coil of the transformer and the other switch on that other side of the circuit is connected to the other end of the primary coil of the transformer.

Preferably the switches are provided in pairs. Preferably one pair is formed of a switch on one side of the circuit which is connected to one end of the primary coil of the transformer and the switch on the other side of the circuit which is connected to the other end of the primary coil of the transformer. Preferably the other pair is provided by the other two switches. Preferably the other pair is formed of the other switch on the one side of the circuit and the switch on the other side of the circuit which is connected to the other end of the primary coil of the transformer than the other switch.

Preferably the method involves the controlled opening and closing of the switches, and more preferably the controlled opening and closing of the aforementioned pairs of switches.

Preferably the method, for part of the time, provides the switches in a first state. In the first state all of the switches and/or both of the pairs of switches may be in the disconnected position. Preferably in the first state no current flows to the primary coil of the transformer. Preferably the method involves, for part of the time, provides the switches in a second state. Preferably in the second state one pair of the switches are in the disconnected position and the other pair of switches are in the connected position. Preferably, in the second state a current flows to the primary coil of the transformer. Preferably the method, for part of the time, provides the switches in a third state. Preferably in the third state one pair of the switches are in the disconnected position and the other pair of switches are in the connected position. Most preferably the disconnected pair in the third state are the connected pair in the second state and the connected pair in the third state are the disconnected pair in the second state. Preferably in the third state a current flows to the primary coil of the transformer, most preferably in the opposite direction to the current in the second state positions.

Preferably the sequence of states in the method passes from first to second state, from second to first state, from first to third state and from third to first state. The method may start at the first or second or third state. Preferably the sequence of states is repeated over and over.

Preferably the frequency of change from one state to another in the chopping stage is at least 500Hz, more preferably at least 1kHz and is between 1kHz to 100kH, for instance 20KHz.

Preferably the switches are never all closed during the method. Alternatively, and preferably additionally, the switches are preferably never provided with one or three switches in the closed position.

The duration for which the switches are in the second and/or third states may be increased to increase the power output. The duration for which the switches are in the first state may be increased to reduce the power output. Preferably the frequency of switching is not altered during alterations in the duration the switches are in a given state.

Preferably the chopping stage results in a series of pulses, the top profile of which is set by a sine wave.

Preferably the transformer steps the voltage down. The voltage may be stepped down from 240V or more to 30V or less.

According to a second aspect of the invention we provide a method of electro fusion welding of one component to a second component, the method comprising providing an AC voltage input to a voltage control method and using the output from the voltage control method for electro fusion welding, the voltage control method being provided according to the first aspect of the invention.

The method may involve joining a first component to a second component using a resistance heated coupling, the coupling being supplied with power using the voltage control method.

According to a third aspect of the invention we provide voltage control apparatus, the apparatus comprising an input for an alternating current waveform, means for rectifying the input to give a single polarity waveform, means for chopping the output of the rectifying means, a primary coil of a transformer which receives the output of the waveform chopping stage and a secondary coil of a transformer, the secondary coil output forming the output waveform of the apparatus.

The third aspect of the invention may include any of the features, options and possibilities set out elsewhere in this document.

According to a fourth aspect of the invention we provide apparatus for electro fusion welding a first component to a second component, the apparatus being adapted to receive an AC voltage input, the input being fed to voltage control apparatus according to the third aspect of the invention, the output being applied, in use to an electro fusion welding location.

The fourth aspect of the invention may include any of the features, options and possibilities set out elsewhere in this document.

Various embodiments of the invention will now be described, by way of example only, and with reference to the accompanying drawings in which:-
Figure 1 is a schematic illustration of a first technique for adjusting the power supply for use in an electro fusion welding unit;
Figure 2a illustrates the rectified output from the first stage of Figure 1;
Figure 2b illustrates the voltage across the capacitor stage of Figure 1;
Figure 2c illustrates the current profile from the capacitor stage of Figure 1;
Figure 3a illustrates the voltage against time wave form for the voltage taken by the capacitor stage;
Figure 3b illustrates the current against time wave form for Figure 3a;
Figure 4 illustrates an alternative power control system according to the present invention;
Figure 5 illustrates the power sampling of the system of Figure 4; and
Figure 6 illustrates the probability of noise occurrence against frequency for the system of Figure 4.

Existing power supply control equipment in general takes the power it needs from the mains supply source, adjusts this input accordingly and provides the desired output for the subsequent operation. The alteration may take the form of one or more of an AC to DC conversion, voltage stepping up or down and / or adjustment of the proportion of the power used.

In electro fusion welding systems, for instance, the mains voltage fed into the primary of a transformer is reduced using the "phase angle control" of a triac (or thyristor) so allowing the secondary voltage fed to the collar to be precisely controlled by varying the time the triac is switched on.

The efficiency of power control units is invariably impaired by the operation of the power control system to give the desired parameters. As a consequence, to achieve a given output the power control unit will take considerably greater input from the mains power source. This variation is problematical for the power generators and inefficient.

Present trends, therefore, are to apply a power factor correction to such power control units.

Additionally, the alterations made by such power control devices, including switching, give rise to a noise which is sent back into the mains power supply. Thus the EMC noise generated when the triac is switched on causes a lot of high power conducted noise to be generated and this noise is very difficult to remove through filtering or other means. In the case of an electro fusion welding unit, for instance, this may take the form of a noise spike at the operational frequency of the power control device, for instance a triac, i.e. 100Hz.

As well as these problems with efficiency and noise, in cases such as electro fusion operations where the switching frequency is relatively low, (50Hz), the hardware, such as the transformer has to be quite big and heavy to achieve the desired output power, for instance 2kW. Through the present invention, using higher frequency operations, the efficiency of these components can be increased, and as a consequence, their size reduced to give volume and weight savings in the overall power control unit. At higher frequencies, the achievable power from the same size transformer goes up, and as a consequence a 2kW transformer will go down in size and weight.

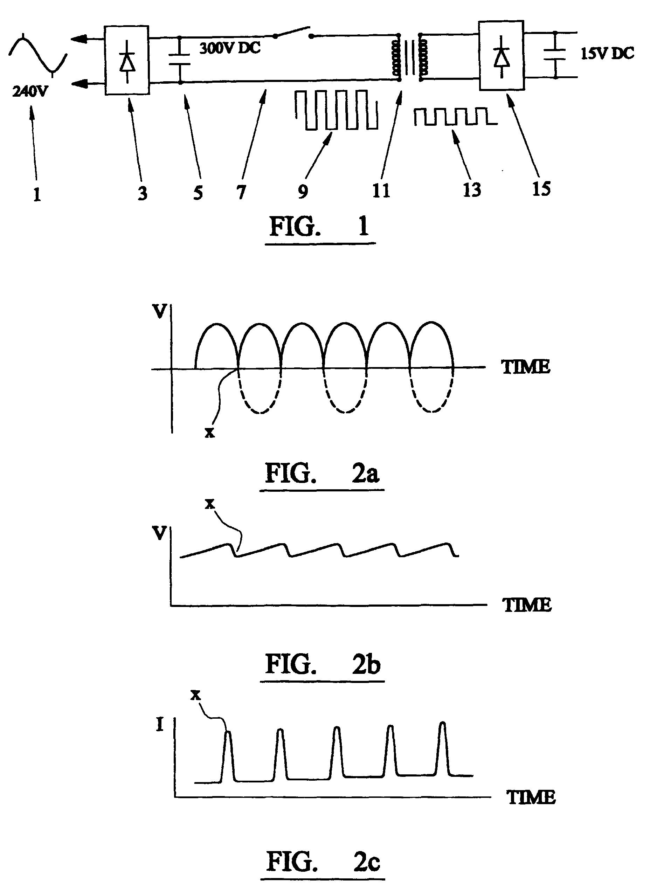

The power control device schematically illustrated in Figure 1, is potentially suitable for electro fusion welding and represents a useful illustration of switched mode power supply. As illustrated the mains source 1 of 240 volts AC is full wave rectified using the bridge, stage 3, to give a single polarity voltage wave form. This form is illustrated in Figure 2a with the rectified parts of the signwave mirroring the previous non-rectified form, dotted line.

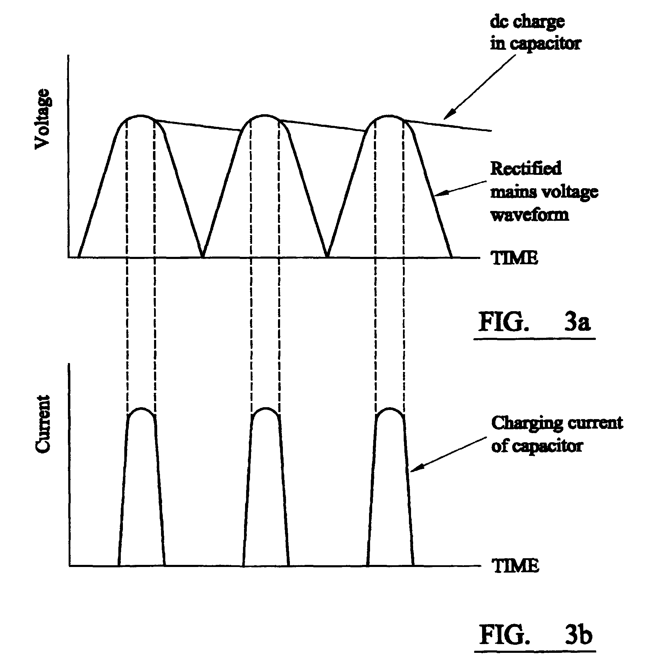

The capacitor, stage 5, serves to produce a substantially DC output form of approximately 300 volts. However, slight variations in the voltage, as illustrated in Figure 2b, still apply. The voltage changes in this wave form result in a substantial peak in current as the voltage passes through the troughs X. As a result the current profile, Figure 2c, has significant peaks and these result in a significant noise contribution back into the mains source 1. This noise is discussed in more detail below in relation to Figure 3.

The DC, approximately 300 volt output from stage 5 is then cut up using switch, stage 7, to produce the square wave (on-off DC profile) illustrated schematically as the output 9 from stage 7. This on-off DC output is passed through transformer stage 11 to step down the voltage from approximately 300 volts to a lower voltage, wave form 13. Because the switching frequency of stage 7 is high compared with the frequency of the mains input, say 20KHz instead of 50Hz, the transformer will be working at more efficient frequencies and so a much smaller transformer can be deployed. The resulting output is a AC power supply of the desired voltage.

Whilst the above mentioned technique results in some noise being introduced into the mains source, it does have the significant advantage that the transformer stage and second rectifying stage are operated at a far higher frequency than in the prior art and as a consequence these stages are operated more efficiently. This offers the potential for reducing the size and weight of the electro fusion welding unit which is advantageous.

The power factor introduced in such a system because of the non-sinusoidal current wave form taken from the mains input when charging the capacitor of stage 5 is more easily handled than power factors in other systems as it is far closer to unity and hence easier to remove. Figure 3a illustrates the voltage taken by the capacitor stage 5 with respect to the rectified mains voltage and the Figure 3b wave form shows the current.

Even though the noise contribution to the source is reduced in such a system when compared with the power control devices presently in operation, the noise level is still significant, but centred around the switching frequency.

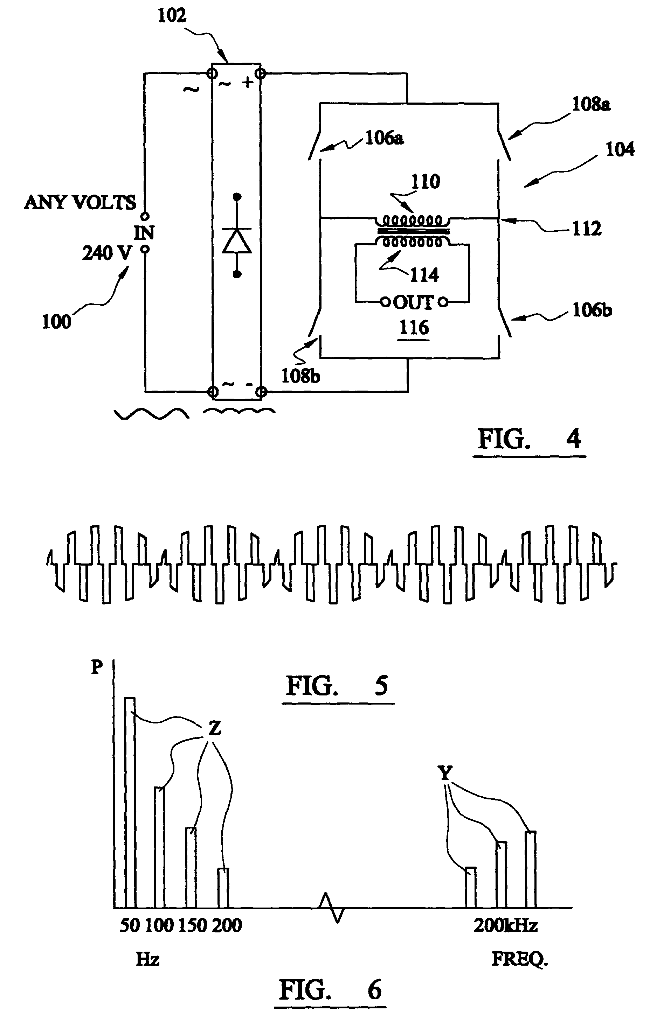

In the preferred form of the present invention illustrated in Figure 4, these problems are addressed to a substantial extent. Once again, the power control device receives a mains input of 240 volts AC, although any voltage could be used, from stage 100. In stage 102, however, this AC signal is full wave rectified by the bridge rectifier 102. However, no DC voltage conversion using a capacitor is employed and as a result there is no "out of phase" current being taken from the mains, and so no power factor is generated at this stage.

The full wave rectified AC voltage is then fed directly into the converter switched of stage 104. The converter stage 104 provides a first pair of switches 106a and 106b, and a second pair of switches 108a and 108b, the switches of the pairs being diagonally opposite one another. The switch positions are either such that all switches are open, as shown in Figure 4, or alternatively that two of the switches are closed. The situation of all four switches closed or one or three of the switches closed do not occur.

The circuit then leads to the primary 110 of a transformer 112 and via the secondary 114 to the output 116.

The switch sequence is as follows:-
Step 1 - all switches open. This gives an output voltage of zero as the primary of the transformer is out of circuit and hence no current flows through it.
Step 2 - switches 106a and 106b closed, switches 108a and 108b open. This brings the primary in to the circuit and as a consequence a current will flow to give an output voltage.
Step 3 - all switches open. The primary is once again out of the circuit and so there is no output voltage.
Step 4 - switches 106a and 106b open, switches 108a and 108b closed. Once again, the primary is in the circuit, and as a consequence an output voltage arises. However, the current through the primary is reversed compared with Step 2, and as a consequence the voltage has a reversed polarity.

The sequence can then be repeated.

The turns ratio (primary to secondary) of the transformer will determine the output voltage for a given input. This is selective to give for example 50V from a 240V input. The actual output voltage can be fine-tuned, however, downwards to the desired welding voltage by varying the time that the switches are closed relative to the time that they are open, i.e. their mark space ratio.

By switching the stage on at a predetermined frequency, power is taken at regular intervals from the AC cycle. The chopping frequency is far higher than the frequency of the mains input. As illustrated in Figure 5 this results in an on-off voltage profile consisting of a series of pulses, the tops of which follow the profile of the AC wave form at that point in time. Just as the total power is represented by the area under the AC sine wave, the total power for the chopped form is represented by the area of the blocks. As a consequence maintaining the same frequency of switching on, but increasing the duration for which the stage is on, increases the width of the pulses and hence the power drawn.

Figure 6 illustrates the comparison between the frequency of the noise signals Z generated in phase angle control of a triac as compared with those, Y, in the preferred form of the present invention. As can be seen, the conducted noise generated when the switches close and open is centred around the switching frequency of that stage rather than the mains supply frequency. This renders the noise signal less relevant, and also makes it easier to filter out as it contains far less power.

The current wave form drawn from the mains supply also more closely approximates to a sine wave. As a consequence the current is taken from all parts of the wave rather than in the triac control method where only half the wave is used. This means that the power factor is much closer to unity so correction is easier and less weighty and small components can be employed to achieve this correction.

In addition to achieving these advantages the rectifiers and inductors operating throughout this embodiment of the invention are concerned with higher frequency variations, and as a consequence operate closer to their optimum conditions. This means that the size and hence weight of these units can be significantly reduced making the power supply devices more portable still for applications such as electro fusion power control.

## Claims

1. A method of controlling a voltage, the method comprising providing an alternating current waveform input to voltage controlling apparatus, rectifying the input to give a single polarity waveform, feeding the single waveform to a waveform chopping stage, feeding the output of the waveform chopping stage to the primary coil of a transformer, the output of the secondary coil of the transformer forming the output waveform of the method.

2. A method according to claim 1 in which the frequency of chopping provided by the chopping stage is between 1kHz and 100kHz.

3. A method according to claim 2 in which the frequency of the alternating current waveform input is between 20Hz and 100Hz.

4. A method according to any preceding claim in which rectification is effected by a full wave rectification stage.

5. A method according to claim 4 in which the rectification stage is a bridge.

6. A method according to any preceding claim in which the chopping stage follows conversion of the AC waveform to DC waveform.

7. A method according to claim 6 in which the conversion to DC is effected by a capacitor connected to both sides of the circuit.

8. A method according to claim 6 or claim 7 in which the chopping stage is effected by a switch, the switch being alternatively in a connected and disconnected position.

9. A method according to any of claims 1 to 5 in which the chopping state is applied to chopping a rectified AC input.

10. A method according to any of claims 1 to 6 or claim 9 in which the chopping stage provides two switches between one side of the circuit and the primary coil of a transformer and two further switches between the other side of the circuit and the primary coil of the transformer.

11. A method according to claim 10 in which one of the switches on one side of the circuit is connected, when closed, to one end of the primary coil of the transformer and the other switch on that side of the circuit is connected, when closed, to the other end of the primary coil of the transformer.

12. A method according to claim 10 or claim 11 in which one of the switches on the other side of the circuit is connected to one end of the primary coil of the transformer and the other switch on that other side of the circuit is connected to the other end of the primary coil of the transformer.

13. A method according to any of claims 10 to 12 in which the switches are provided in pairs, one pair is formed of a switch on one side of the circuit which is connected to one end of the primary coil of the transformer and the switch on the other side of the circuit which is connected to the other end of the primary coil of the transformer and the other pair is formed of the other switch on the one side of the circuit and the switch on the other side of the circuit which is connected to the other end of the primary coil of the transformer than the other switch.

14. A method according to any of claims 10 to 13 in which the method, for part of the time, provides the switches in a first state, in the first state all of the switches and/or both of the pairs of switches being in the disconnected position.

15. A method according to any of claims 10 to 14 in which the method for part of the time, provides the switches in a second state, in the second state one pair of the switches are in the disconnected position and the other pair of switches are in the connected position.

16. A method according to any of claims 10 to 15 in which the method, for part of the time, provides the switches in a third state, in the third state one pair of the switches are in the disconnected position and the other pair of switches are in the connected position, the disconnected pair in the third state are the connected pair in a second state and the connected pair in the third state are the disconnected pair in a second state.

17. A method according to claim 14 in which the sequence of states in the method passes from first to second state, from second to first state, from first to third state and from third to first state.

18. A method according to any of claims 10 to 17 in which the frequency of change from one state to another in the chopping stage is between 1kHzto 100kHz.

19. A method of electro fusion welding of one component to a second component, the method comprising providing an AC voltage input to a voltage control method and using the output from the voltage control method for electro fusion welding, the voltage control method being provided according to any of claims 1 to 18.

20. A method according to claim 19 in which the method involves joining a first component to a second component using a resistance heated coupling, the coupling being supplied with power using the voltage control method.

21. Voltage control apparatus, the apparatus comprising an input for an alternating current waveform, means for rectifying the input to give a single polarity waveform, means for chopping the output of the rectifying means, a primary coil of a transformer which receives the output of the waveform chopping stage and a secondary coil of a transformer, the secondary coil output forming the output waveform of the apparatus.

22. Apparatus for electro fusion welding a first component to a second component, the apparatus being adapted to receive an AC voltage input, the input being fed to voltage control apparatus according to claim 21, the output being applied, in use to an electro fusion welding location.
